(19) Europäisches Patentamt / European Patent Office / Office européen des brevets

(11) **EP 4 131 131 A1**

(12) **EUROPEAN PATENT APPLICATION**
published in accordance with Art. 153(4) EPC

(43) Date of publication:
**08.02.2023 Bulletin 2023/06**

(21) Application number: **21775082.7**

(22) Date of filing: **02.03.2021**

(51) International Patent Classification (IPC):
**G06Q 50/16** $^{(2012.01)}$

(52) Cooperative Patent Classification (CPC):
**G06Q 50/16**

(86) International application number:
**PCT/JP2021/007959**

(87) International publication number:
**WO 2021/192856 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.03.2020 JP 2020053502**

(71) Applicant: **NEC Corporation
108-8001 Tokyo (JP)**

(72) Inventors:
• **SAKAKIBARA Satoshi
Tokyo 108-8001 (JP)**
• **IWASAKI Yusuke
Tokyo 108-8001 (JP)**
• **KAWACHI Akio
Tokyo 108-8001 (JP)**
• **HANZAWA Yuya
Tokyo 108-8001 (JP)**
• **ISHIWATA Kentaro
Fuchu-shi, Tokyo 183-8502 (JP)**
• **HORI Ayana
Tokyo 108-8001 (JP)**
• **KONO Ryo
Tokyo 108-8001 (JP)**
• **SONG Xiaoyu
Tokyo 108-8001 (JP)**

(74) Representative: **Betten & Resch
Patent- und Rechtsanwälte PartGmbB
Maximiliansplatz 14
80333 München (DE)**

(54) **HOUSING BUSINESS SUPPORT DEVICE, HOUSING BUSINESS SUPPORT SYSTEM, HOUSING BUSINESS SUPPORT METHOD, AND RECORDING MEDIUM**

(57) Provided are a housing business support device and the like capable of supporting business activities relating to housing. A housing business support device 30 is provided with an integrated information storage unit 31, a selecting unit 32, an analyzing unit 33, and an output unit 34. The integrated information storage unit 31 stores at least one of customer information, commodity information, dwelling information, business information, and contact information. The selecting unit 32 presents, for selection, commodity information for extracting a customer candidate, from at least one of commodity information relating to new builds, commodity information relating to renovation, and commodity information relating to aftercare service. The analyzing unit 33 analyzes customers correlated with a selected commodity on the basis of information necessary for extracting a customer candidate associated with the commodity, acquired from the integrated information storage unit 31. As a result of the analysis, the output portion 34 outputs a customer fulfilling a predetermined condition in relation to the correlation with the commodity, as a customer candidate.

Fig. 14

**Description**

[Technical Field]

The present disclosure relates to a housing business support device or the like for supporting business activities related to housing.

[Background Art]

As a system for supporting business activities, PTL 1 discloses a technology for presenting a most effective business activity plan according to a business situation by accumulating business know-how. PTL 2 discloses a technique of predicting customer revenue in consideration of a commodity contract expectation probability with a customer, an expected transaction amount in a case of contracting commodity, and an influence on a transaction increase/decrease of another contract commodity associated with the commodity contract.

In addition, PTL 3 and PTL 4 also disclose techniques related to the above.

[Citation List]

[Patent Literature]

[PTL 1] JP 10-124584 A
[PTL 2] JP 2004-139196 A
[PTL 3] JP 2002-24523 A
[PTL 4] JP 2002-149958 A

[Summary of Invention]

[Technical Problem]

In PTL 1, a business know-how rule is generated and stored in a database. In PTL 2, the sum of a future revenue of each commodity regarding a customer and a predicted revenue increase/decrease amount of another commodity at the time of commodity contract is calculated, and a net profit of each commodity of the customer is predicted. However, none of them is specialized in sales related to housing, and the above method may not be applied to housing sales that continue sales activities to one customer for several tens of years. That is, the methods of PTLs 1 and 2 have a problem that it is not possible to appropriately support a salesperson who performs housing business activities.

The present disclosure has been made in view of the above problems, and an object of the present disclosure is to provide a housing business support device or the like for supporting business activities related to housing.

[Solution to Problem]

In view of the above problems, a first aspect of the present disclosure is a housing business support device including:

a selection means configured to present, as options to be selected, a product for which a customer candidate is extracted from at least one of product information related to new building, product information related to renovation, and product information related to aftercare service;

an integrated information storage means configured to store at least one of information related to customers, information related to the products, information related to customer residences, information related to salespersons who support the customers, and information related to contact between the customers and the salespersons;

an analysis means configured to analyze the customer relevant to the selected product based on information needed to extract the customer candidate associated with the product, which is obtained from the integrated information storage means; and

an output means configured to output, as an analysis result, the customer candidate satisfying a predetermined condition regarding the product.

A second aspect of the present disclosure is a housing business support system including:

the above-described housing business support device; and

a robot that is communicably connected to the housing business support device and interacts with the customers via voice or text.

A third aspect of the present disclosure is a housing business support method including:

presenting, as options to be selected, a product for which a customer candidate is extracted from at least one of product information related to new building, product information related to renovation, and product information related to aftercare service;

analyzing the customer relevant to the selected product based on information needed to extract the customer candidate associated with the product, which is obtained from an integrated information storage means storing at least one of information related to customers, information related to the products, information related to customer residences, information related to salespersons who support the customers, and information related to contact between the customers and the salespersons; and

outputting, as an analysis result, the customer candidate satisfying a predetermined condition regarding the product.

A fourth aspect of the present disclosure is a housing business support program that causes a computer execute:

presenting, as options to be selected, a product for which a customer candidate is extracted from at least one of product information related to new building, product information related to renovation, and product information related to aftercare service;

analyzing the customer relevant to the selected product based on information needed to extract the customer candidate associated with the product, which is obtained from an integrated information storage means storing at least one of information related to customers, information related to the products, information related to customer residences, information related to salespersons who support the customers, and information related to contact between the customers and the salespersons; and

outputting, as an analysis result, the customer candidate satisfying a predetermined condition regarding the product.

The housing business support program may be stored in a non-transitory computer-readable/writable recording medium.

[Advantageous Effects of Invention]

According to the present disclosure, it is possible to provide a housing business support device or the like for supporting business activities related to housing.

[Brief Description of Drawings]

Fig. 1 is a block diagram illustrating a configuration example of a housing business support system according to a first example embodiment of the present disclosure.

Fig. 2 is a block diagram illustrating a configuration example of a housing business support device according to the first example embodiment of the present disclosure.

Fig. 3 is a diagram illustrating an example of a data structure of customer information.

Fig. 4 is a diagram illustrating an example of state transitions of customer phases.

Fig. 5 is a diagram illustrating an example of a data structure of customer types.

Fig. 6 is a diagram illustrating an example of a data structure of product information.

Fig. 7 is a diagram illustrating an example of a data structure of residence information.

Fig. 8 is a diagram illustrating an example of a data structure of contact information.

Fig. 9 is a diagram illustrating an example of a data structure of business information.

Fig. 10 is a diagram illustrating an example of a prediction model.

Fig. 11 is a diagram illustrating an example of a data structure of a customer list.

Fig. 12 is a flowchart illustrating an example of information input operation of the housing business support device.

Fig. 13 is a flowchart illustrating an example of a customer list output operation by the housing business support device.

Fig. 14 is a block diagram illustrating a configuration example of a housing business support device according to a second example embodiment of the present disclosure.

Fig. 15 is a block diagram illustrating a configuration example of an information processing device applicable in each example embodiment.

Fig. 16 is a block diagram illustrating a configuration example of a typical housing business system.

[Example Embodiment]

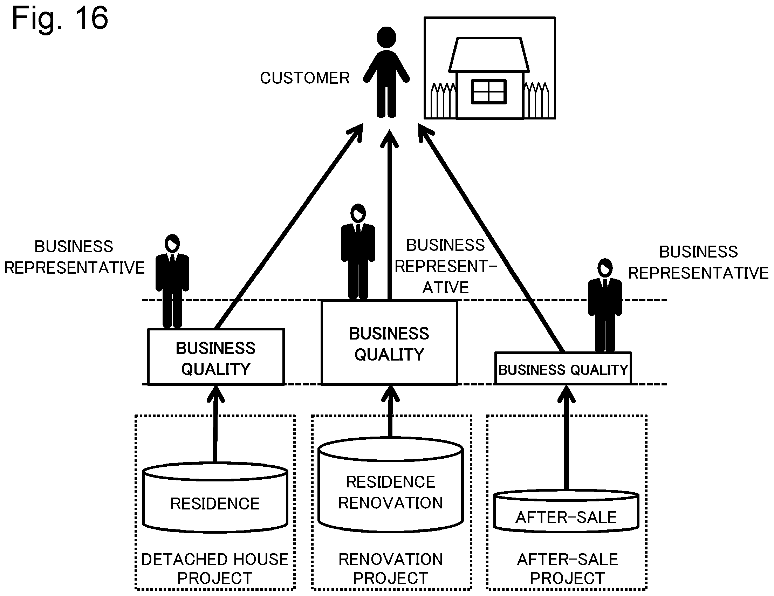

Fig. 16 illustrates a conceptual diagram of sales activities related to housing. The sales activities related to housing include, for example, those related to new building, renovation, and after-care service (hereinafter, also referred to as "after-sale"). Here, new building mainly relates to a project of newly-built houses (hereinafter, also referred to as "new building"), and represents, for example, a custom-built house, a ready-built house, or rebuilding of a house. The renovation refers to remodeling of sold new building, for example, adding a room, installing a new wood deck, and replacing a plumbing product in a kitchen or a bath unit. The products represent all items to be sold to customers, and include new houses themselves and kitchen systems (sinks and counter sets). The after-sale represents guarantee-related service of target product or consumable/service purchases after the new building is sold. Note that product (for example, a disposer or a ventilation fan) to be installed in a new building may also be included in the after-sale guarantee. After that, since a guarantee contract (failure details to be guaranteed or a guarantee period) is concluded when the new building is sold or the product is installed, repair or part replacement is free of charge or at a reduced price if it is covered by the guarantee, and it is charged if it is not covered by the guarantee.

In sales activities, usually each of salespersons of a new building project, salespersons of a renovation project, and salespersons of an after-sale project support customers. Each project has customer information in their individual databases. In addition, the business quality varies depending on the salesperson, which causes a difference in sales performance.

Although the timings of those support times may be different, the customers to be sales targets of these projects are often the same persons or the same household members. It may be, for example, a case where one customer purchases a newly-built house, then purchases after-care service, and then orders renovation of the new house, or a case where a husband purchases a newly-built house, and then his wife mainly orders renovation of a kitchen (watering) or a storage. However, since the data held by each salesperson is not unified, it is troublesome for a customer to disclose the same information to different salespersons in charge every time the customer purchases a newly-built house, purchases renovation, or purchases after-care service, and to repeat the same explanation. This is because a characteristic of a housing-related business that a period from a purchase of service to next purchase of service, by one customer, is long, and the service expected to be purchased is often different in each phase. For example, after purchasing a newly-built house, it may take several tens of years to purchase a new newly-built house again for rebuilding, and it is difficult to maintain the customer information practical and to use the customer information in a cross-phase manner at an appropriate timing. However, a customer who has purchased a newly-built house often purchases after-care service or renovation in a span of several years. Even salespersons change, by integrating and centrally managing the customer information, all salespersons can view all purchase history (construction history) of the customers, and this makes it convenient that the customers do not need to repeatedly explain the same to individual salespersons. In addition, if the salesperson browses the purchase history (construction history) and customer information of the customer the salesperson is in charge, the customer support becomes smooth, and even if the salesperson in charge of a certain customer changes due to transfer or the like, the customer information held by each salesperson can be made uniform between the salespersons, and furthermore, the business quality can be made uniform.

Further, some customers may request a company whose salesperson has provided appropriate product information at the timing the customers are considering to renovate their house after purchasing newly-built houses, even if the company is different from the company that the customer has purchased the newly-built house. This is because for the customers who are considering renovation, a company (salesperson) that provides information on their favorite product at a good timing is preferable because it saves time and effort to visit a showroom or the like. In other words, in any of newly-built house purchase, renovation product purchase, and after-care service purchase, providing appropriate product information to interested customers at an appropriate timing leads to sales promotion.

Therefore, in each example embodiment of the present disclosure, a method of improving sales efficiency by centrally managing information regarding customers and providing appropriate product information to customers at appropriate timing will be described.

In the following description, a detached house will be mainly described, but the present invention can also be applied to a housing complex such as an apartment.

Hereinafter, each example embodiment will be described in detail with reference to the drawings. In the following description of the drawings, the same or similar parts are denoted by the same or similar reference numerals. However, the drawings schematically illustrate a configuration in the example embodiment of the present invention. Further, the example embodiment of the present invention described below is an example, and can be appropriately changed within the same essence.

<First Example Embodiment>

(Housing Business Support System)

Hereinafter, a housing business support system 100 according to a first example embodiment of the present disclosure will be described with reference to the drawings.

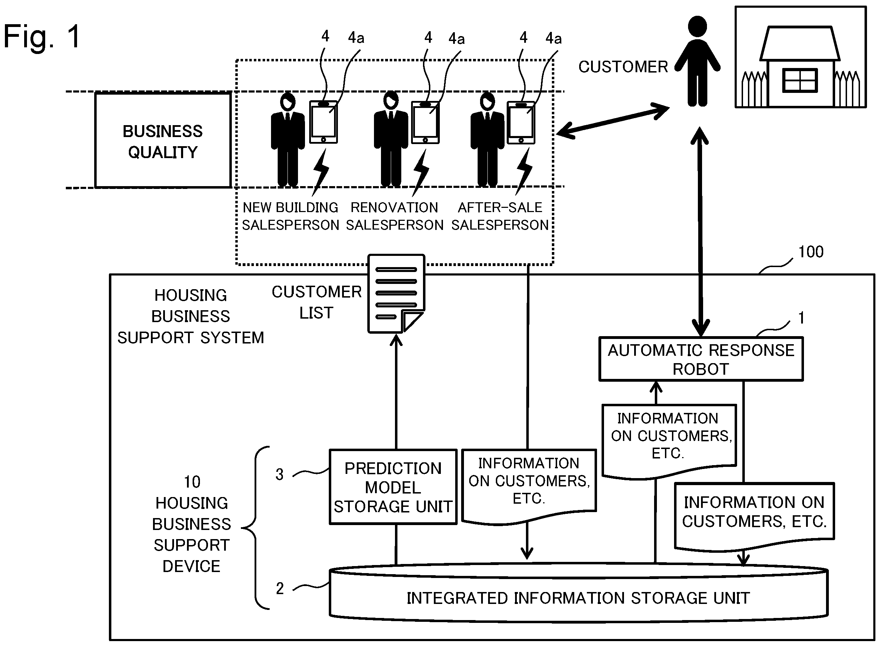

Fig. 1 is a diagram illustrating a schematic configuration of the housing business support system 100. As illustrated in Fig. 1, the housing business support system 100 includes an automatic response robot 1 and a housing business support device 10. The housing business support device 10 includes an integrated information storage unit 2 and a prediction model storage unit 3. When customer information, residence information, contact information with a customer, business information on a salesperson, and product information (hereinafter described as information of customers, etc.) are acquired for example, the salesperson of each project stores the information in the integrated information storage unit 2 via a terminal 4. The automatic response robot 1 is a machine-learned artificial intelligence model related to housing sales, and interacts (has conversation) with a customer at a housing exhibition, a renovation exhibition, a housing business website on the Internet, and the like, and stores information of customers, etc. obtained through the interaction in the integrated information storage unit 2. In addition, the automatic response robot 1 may perform sales activities for the customer. For example, the sales activities of inexpensive products or frequently sold products may be performed by the automatic response robot 1, and the sales activities of expensive products or infrequently sold products may be performed by the salespersons. Note that it is preferable to feed back the content of the interaction with the customer, the content and result of the sales activities by the automatic response robot 1 to cause the artificial intelligence model to learn. The automatic response robot is also referred to as a robot.

The prediction model storage unit 3 stores a prediction model. The prediction model is a model in which data related to housing sales is machine-learned, and executes contract prediction of a certain product based on information of customers, etc. stored in the integrated information storage unit 2, and outputs a prediction result as a customer list. In the customer list, information regarding a customer who is likely to purchase a predetermined product at a predetermined timing is described. Each salesperson acquires a customer list of products that the salesperson tries to sell via the terminal 4 that the salesperson has, and provides the customers with appropriate products at an appropriate timing by conducting business activities to the customers presented in the customer list. This improves the sales contract rate.

(Housing Business Support Device)

The prediction model storage unit 3 stores a prediction model for predicting customer purchase. As the prediction model, one that has learned teacher data is used. Note that data of the execution result of the purchase prediction (whether the customer of the predicted customer list has actually purchased a product or the like) may be fed back to the prediction model.

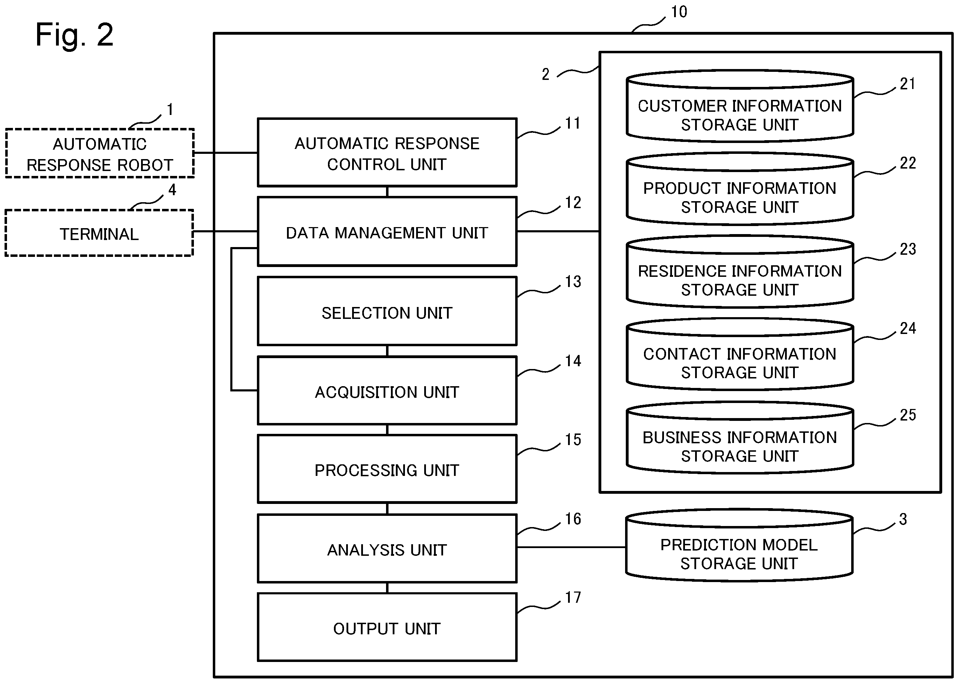

As illustrated in Fig. 2, the housing business support device 10 includes an automatic response control unit 11, a data management unit 12, a selection unit 13, an acquisition unit 14, a processing unit 15, an analysis unit 16, an output unit 17, the prediction model storage unit 3, and the integrated information storage unit 2. The integrated information storage unit 2 includes a customer information storage unit 21, a product information storage unit 22, a residence information storage unit 23, a contact information storage unit 24, and a business information storage unit 25.

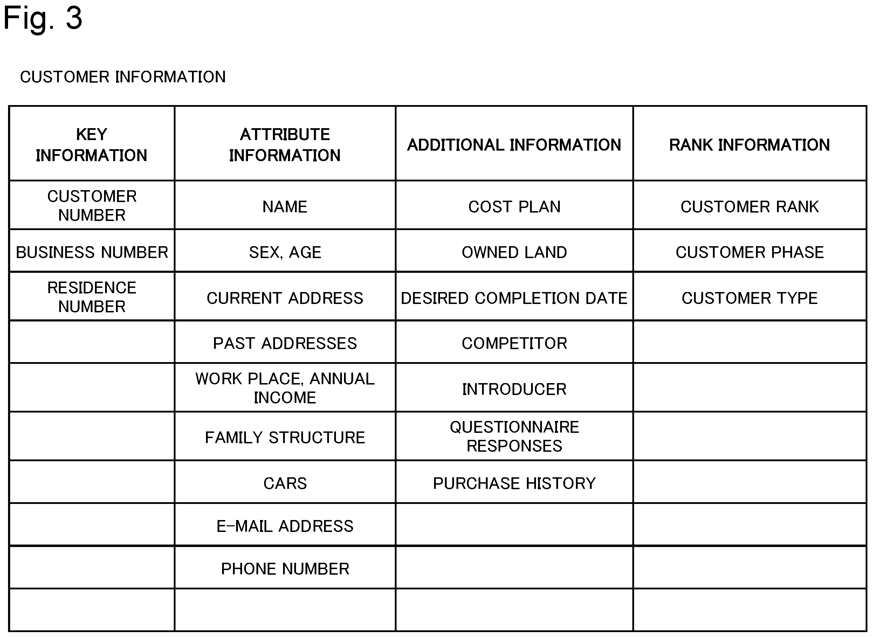

The customer information storage unit 21 stores customer information. As illustrated in Fig. 3, the customer information is data including items such as key information, attribute information, additional information, and rank information. The key information is a number that can be a primary key of data, and includes, for example, a customer number, a business number, and a residence number.

The customer number is an identifier (ID: IDentifier) that can uniquely identify a customer. The business number is an ID that can uniquely identify the salesperson. The residence number is an ID that can uniquely identify residence owned by the customer.

The attribute information is information indicating the attribute of the customer, and is, for example, data including items such as name, sex, age, current address, past address, work place, annual income, family structure, and cars. The attribute information may include an e-mail address and a telephone number of the customer. The past address is information indicating a place where the customer used to live, and may not be a specific address. For example, it may be a hometown prefecture. The cars are information indicating a vehicle type or the like of the car owned by the customer, but may be left blank when the customer does not own a car.

The additional information is supplementary information of the customer not included in the attribute information, and is, for example, data including items such as cost plan, owned land, desired completion date, competitor, introducer, questionnaire response, and purchase history. The cost plan is a plan for fund procurement related to product purchase, and specifically refers to owned assets, a result of examination of loans of banks, and the like. The owned land indicates if there is land owned by the customer. For example, if there is land that is owned, details such as the address and the area size may be input, and if there is no land that is owned, this field may be left blank. The competitor indicates whether a competitor is conducting business with the customer. For example, when there is a competitor, the name of the company, the name of the business representative, and the like may be input, and when there is no competitor, this filed may be left blank. There may be more than one competitor. The introducer indicates whether there is another customer who has introduced the customer. For example, if there is an introducer, the information (customer information) such as the name of the introducer may be input, and if there is no introducer, this field may be left blank. There may be a plurality of introducers. The questionnaire response is an item for inputting what the customer has asked about the customer's personal preferences and conditions, products that the customer is interested in, and the like via a paper medium or an electronic medium. The purchase history is a history of product purchases (newly-built house, etc.) from own company or other companies.

The rank information is information for categorizing the customers, and is, for example, data including items such as a customer rank, a customer phase, and a customer type. The customer rank refers to a rank of an attribute of a customer who may purchase housing products. For example, in a newly-built house purchase, a customer who has a perfect cost plan or a customer who owns land is ranked high, and conversely, a customer who does not have a cost plan and does not own land is ranked low.

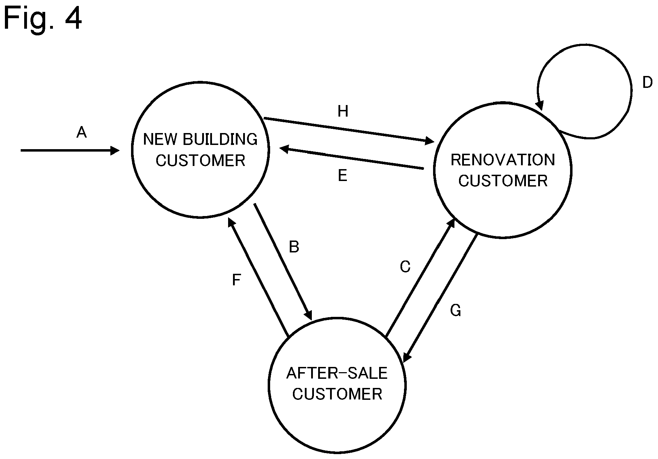

The customer phase information is information indicating whether the customer is in a state of being a customer candidate (customer phase) of any products of new building, renovation, and after-sale. For example, as illustrated in Fig. 4, a customer who does not own a newly-built house and is considering purchasing a newly-built house is in phase A, a customer who owns a newly-built house and is considering purchasing after-sale is in phase B, a customer who is considering renovation after after-sale is in phase C, a customer who is considering renovation of another place after renovation is in phase D, and a customer who is considering rebuilding a house after renovation is in phase E. In addition, a customer who is considering rebuilding a house after the after-sale is in phase F, a customer who is considering purchasing after-sale after renovation is in phase G, and a customer who is considering renovation after purchasing (including rebuilding) a newly-built house is in phase H. Note that a plurality of phases may be applied to one customer. For example, a customer who owns a new house and is considering purchasing after-sale or is considering renovation may apply both phase B and phase H.

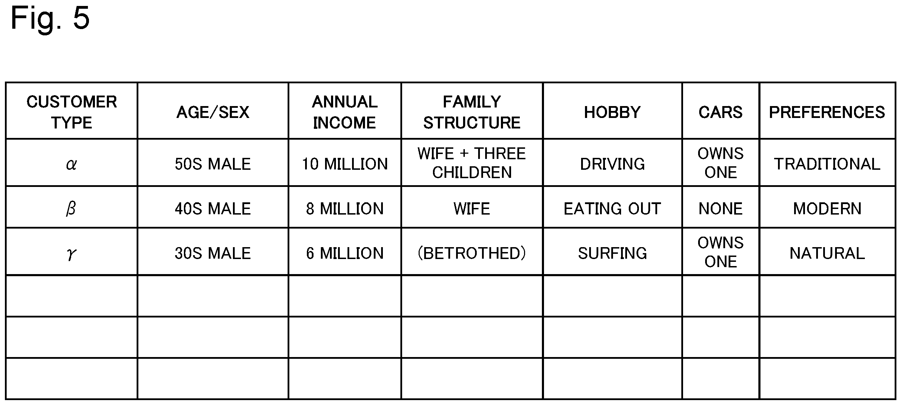

The customer types are obtained by categorizing customers mainly based on the attribute information of the customers, and for example, as illustrated in Fig. 5, customer types are classified according to age, sex, annual income, family structure, hobby, cars, and preferences (of housing). For example, a type of a man is assumed as an $\alpha$ type when he is in his fifties, his annual income is 10 million yen, he has a wife and three children in his family, his hobby is driving, he owns a car, and he prefers a conservative housing or interior.

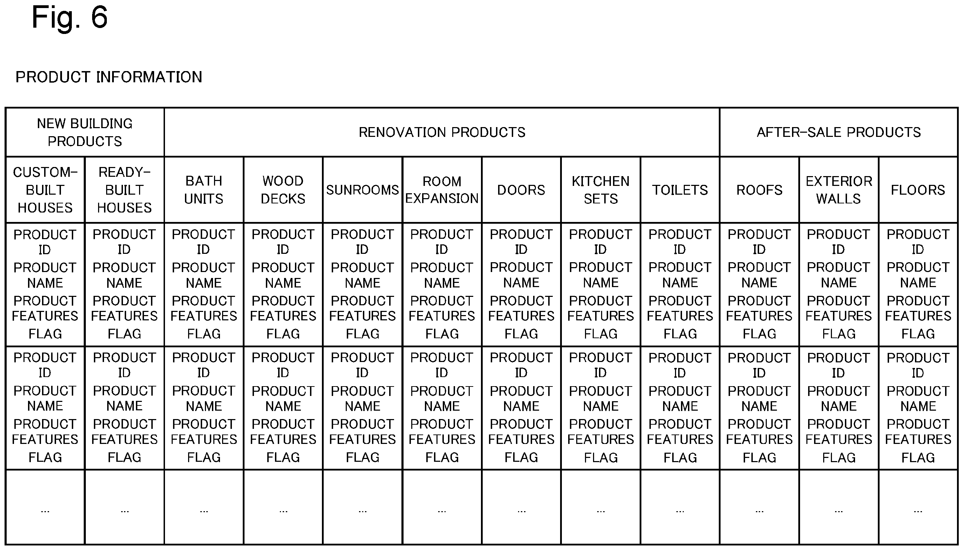

The product information storage unit 22 stores product information. The product information includes an upper class, a middle class detailing the upper class, and a lower class detailing the middle class. Note that the number of classes is not limited thereto, and may be divided into classes of three or more layers. As illustrated in Fig. 6, the product information is classified into, for example, new building products, renovation products, and after-sale products as the upper class. As the middle class, for example, the new building products include custom-built houses, ready-built houses, and the like, for example, the renovation products include bath units, wood decks, and the like, and for example, the after-sale products include roofs, outer walls, and the like. As the lower class, product ID, product name, product features, and flag of each product are provided below the middle class. Each product is a manufactured item which can be sold individually. For example, if the product is a "renovation" product and is a product in "door" parts, a specific door (for example, product ID: 123, product name: easy door DX, product features: the door can be opened and closed with a light force) can be identified. Note that the selection unit 13 may be able to select a product for customer list generation from any of the upper class, the middle class, and the lower class. For example, in Fig. 6, the selection unit 13 may select the upper class "new building", and the output unit 17 may output a customer list of purchase prediction customers for the new building. The selection unit 13 may select the middle class "kitchen sets", and the output unit 17 may output a customer list of purchase prediction customers for the kitchen sets. The selection unit 13 may select the lower class "easy door", and the output unit 17 may output a customer list of purchase prediction customers of the easy door. Note that a plurality of products may be selected, and a customer list of purchase prediction customers for the plurality of products may be generated. The renovation products and after-sale products may include the same items in the middle class. For example, in the case of the bath units, the bath units may be included in any middle class because the bath units may be renovated or may be subjected to after-sale service due to water leakage. The flag is information for distinguishing the products assigned to the salespersons from the products assigned to the automatic response robot 1. For example, the salesperson is in charge of expensive products or products requiring complicated explanation, and the automatic response robot 1 is in charge of products that is inexpensive and does not require explanation so that the customer can easily purchase those products, and a flag (for example, "0" for salespersons, "1" for the automatic response robot, and "2" for salespersons and the automatic response robot) is set for the product ID.

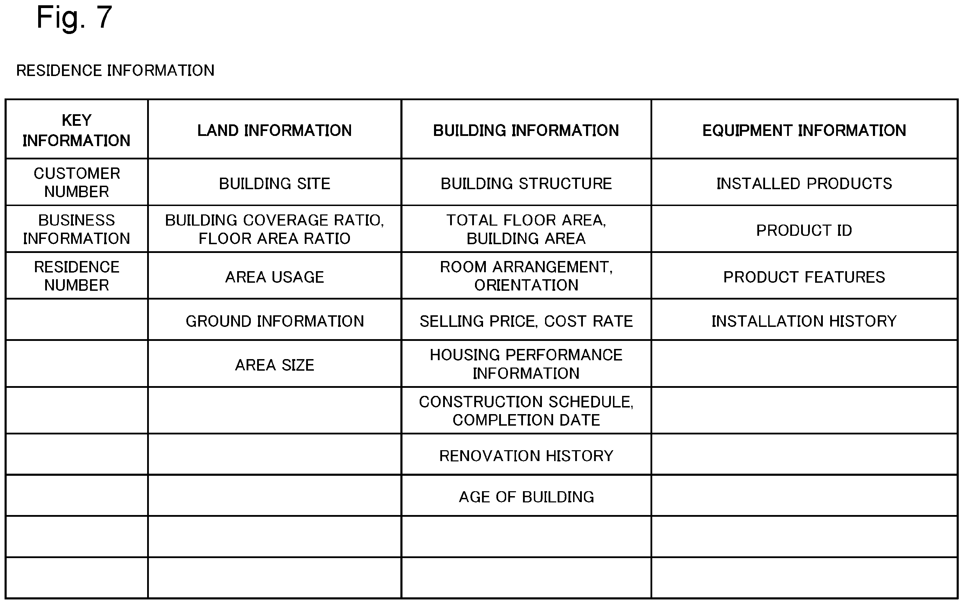

The residence information storage unit 23 stores residence information. As illustrated in Fig. 7, the residence information is data including key information, land information, building information, and equipment information as items.

The land information is detailed information of the land for construction, and is data including, for example, building site, building coverage ratio, floor area ratio, area usage, ground information, area size, and the like as items. The building information is information regarding a residence (building), and is data including, for example, building structure, total floor area, building area, floor plan, orientation, selling price, cost rate, housing performance information, construction schedule, completion date, renovation history, age of building, and the like as items. The equipment information is information regarding equipment (products, etc.) provided in the residence, and is, for example, data including equipment products, product ID, product features, installation history (of the equipment), and the like as items. The product ID is the same as the ID of the product information illustrated in Fig. 6.

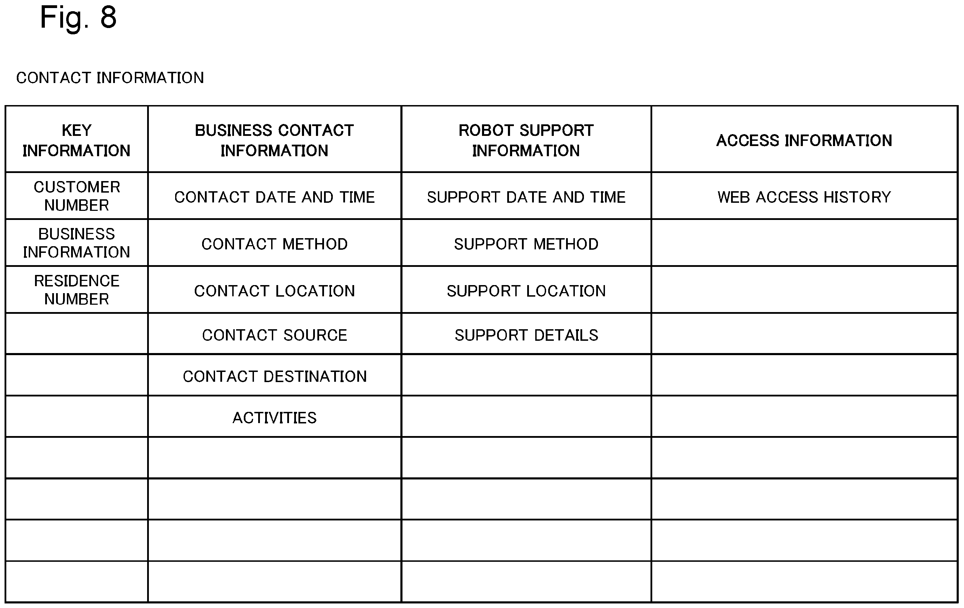

The contact information storage unit 24 stores contact information. The contact information is information on a case where a customer and a salesperson make contact, and as illustrated in Fig. 8, the contact information is data including key information, business contact information, robot support information, access information, and the like as items.

The business contact information is data including, as items, contact date and time, contact method (interview, telephone, e-mail, etc.), contact location (exhibition, customer's house, etc.), contact source (introduced by an associated company, etc.), contact destination (introducing the customer to another department of the company, etc.), and activities (explained a product, etc.). The robot support information is information on a case where the automatic response robot 1 interacts with the customer by voice or chat, and is data including items of support date and time, support method (voice, chat, etc.), and support location (exhibition, Internet website, etc.), for example. The access information is a history of access when the customer browses the Internet website of the housing company.

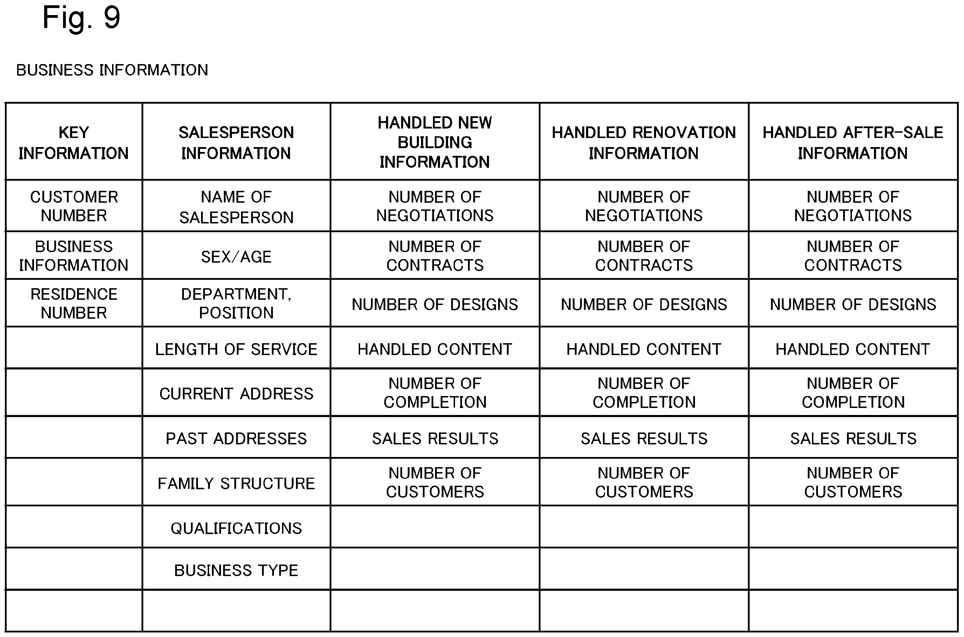

The business information storage unit 25 stores business information. The business information is information on a salesperson of the housing company, and as illustrated in Fig. 9, the business information is data including, as items, key information, salesperson information, handled new building information, handled renovation information, handled after-sale information, and the like.

The salesperson information is data including, as items, name salesperson, sex (of the salesperson, hereinafter, the same), age, department, position, length of service, current address, past address, family structure, qualifications, business type, and the like. The past address is information indicating a place where the salesperson used to live, and may not be a specific address. For example, it may be a hometown prefecture. Note that the past address is also included in the customer information. With this configuration, it can be known in advance that the customer and the salesperson are from the same hometown, that the current address of the customer is familiar to the salesperson since the salesperson used to live in the area, and the like, and thus, the information can be used when a person in charge of the business is determined or when the salesperson tries to start an interaction with the customer.

The handled new building information is information on new building sales that a specific salesperson has been in charge of so far, and is data including, for example, number of negotiations, number of contracts, number of designs, handled content, number of completions, sales results, number of customers, and the like as items. Note that the handled renovation information is information on renovation sales that the specific salesperson has been in charge of so far, and the handled after-sale information is also information on after-sale that the specific salesperson has been in charge of so far. The handled renovation information and the handled after-sale information are data including items similar to those of the Handled new building information.

In Fig. 2 again, the automatic response control unit 11 is communicably connected to the automatic response robot 1 and controls the automatic response robot 1. The communication may be wireless, wired, or a combination of wireless and wired state. Specifically, if there is information necessary for the automatic response robot 1 and the customer to interact with each other via voice, text, image, video, and the like, the automatic response control unit 11 acquires the information necessary for the interaction from the customer information, the product information, the residence information, the business information, and the contact information stored in the integrated information storage unit 2, and delivers the acquired information to the automatic response robot 1. The information necessary for the interaction can be determined based on the learned machine learning model. Further, the automatic response control unit 11 analyzes information obtained through the interaction with the customer. In the analysis, the automatic response control unit 11 identifies which of the customer information, product information, residence information, business information, and contact information the information obtained through the interaction is, and sorts and stores the identified information in each storage unit of the integrated information storage unit 2. In a case where there is an item which is not input in each item of the customer information and the residence information or in a case where the information of each item becomes out of date, the automatic response control unit 11 may control the interaction of the automatic response robot 1 to inquire the customer about the information of the item. For example, when the information of the item of the family structure in the customer information is insufficient, the automatic response control unit 11 may cause the automatic response robot 1 to ask a question such as "By the way, how many people do you have in your family, Mr./Ms. ...?". The automatic response control unit 11 may cause the automatic response robot 1 to ask a question "What are your recent hobbies, Mr./Ms. ...?" or the like every predetermined period for items such as hobby or family structure, which may change.

The automatic response robot 1 may sell products to customers, but the automatic response control unit 11 refers to the flag of the product information stored in the product information storage unit 22, and when the product is the product to which the automatic response robot 1 is in charge (for example, "1" for the automatic response robot), recommends the product to customers. In a case where the customer replies that he/she will purchase the product, the automatic response control unit 11 may request an external electronic payment server (not illustrated) to make an electronic money or credit card payment, or may request an external item shipping business server (not illustrated) to ship the purchased product after the payment.

The data management unit 12 manages data in the integrated information storage unit 2. The data management unit 12 accepts a request of information search or update from the terminal 4 of the salesperson and the automatic response control unit 11, and searches information in the integrated information storage unit 2 to transfer the data to the terminal 4 or the automatic response control unit 11, or updates the data. The data management unit 12 accepts a request of information search from the acquisition unit 14 and transfers searched data to the acquisition unit 14.

The selection unit 13 presents, for options to be selected, products for extracting a customer candidate (customer list), from at least one of product information relating to new building, product information relating to renovation, and product information relating to aftercare service. The selection unit 13 presents for which products a customer list is needed on a display unit (not illustrated) of the housing business support device 10 or a display unit 4a of the terminal 4 of the salesperson, and leads the salesperson or an operator to select a product for which a customer list is needed. When acquiring a selected product, the selection unit 13 transfers the data to the acquisition unit 14.

The acquisition unit 14 acquires information needed to generate a customer list associated with the selected product from the integrated information storage unit 2 via the data management unit 12. Here, the information needed to generate a customer list associated with a product is set in advance by a designer or the like. Note that, when there are different products A and B, the information needed to generate a customer list for the product A and the information needed to generate a customer list for the product B may differ. The acquisition unit 14 transfers information needed to generate a customer list associated with the acquired product to the processing unit 15.

The processing unit 15 processes the information needed to generate a customer list associated with the product, which is acquired from the acquisition unit 14. For example, when information needed to generate a customer list includes current address, a value of Kanto area including Tokyo, Kanagawa, Saitama, Chiba, and the like is processed to "0.8", and a value of Kansai area including Osaka, Kyoto, Kobe, Nara, and the like is processed to "-0.1". Here, the information needed to process is set in advance by a designer or the like. The processed information is sent to the analysis unit 16.

The analysis unit 16 analyzes customers relevant to the selected product based on information needed for extracting customer candidates relevant to the product, acquired from the integrated information storage unit 2. More specifically, the analysis unit 16 analyzes customers relevant to the product based on the processed information (the information needed to generate a customer list) acquired from the processing unit 15. The analysis unit 16 acquires a prediction model from the prediction model storage unit 3, inputs the processed information as a parameter to the prediction model, and acquires an output value. The analysis unit 16 analyzes the output value and extracts customers relevant to the product. At the time of extracting customers, the analysis unit 16 also preferably extracts the reason why the customers are extracted, that is, the parameter that is the cause of making the customers a high score.

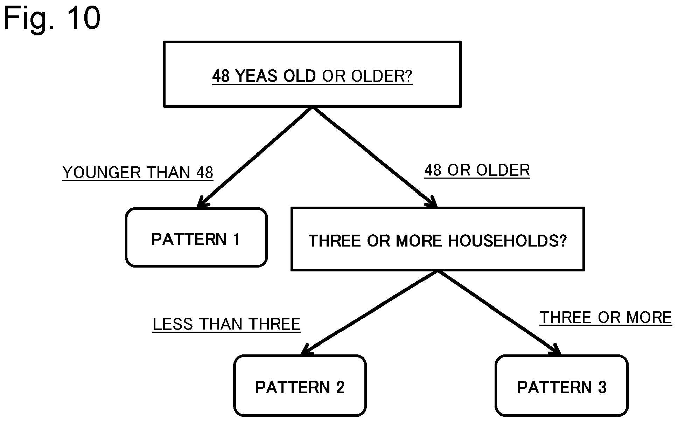

An example that simplifies prediction using a prediction model will be described with reference to Fig. 10. For example, in a case where the product is a newly-built house and a score is calculated based on "age" and "family structure" of the customer included in the customer information, the information acquired from the processing unit 15 is assumed as follows.

- For the parameter "age", a variable "1" and a coefficient "5.7" are used when the age is 48 years old or older, and a variable "0" is used when the age is 48 years old or younger.
- For the parameter "family structure", a variable "2" and a coefficient "7.2" are used when the number of households is less than three, and a variable "3" and a coefficient "8.5" are used when the number of households is equal to or more than three.

Note that the variable is a numerical value given to each parameter, and the coefficient is a numerical value given as a contribution degree to the parameter. Both numerical values are designed in advance by a designer. Further, as an example, a following score calculation formula may be used.

$$\text{Score} = \text{Variable 1} \times \text{Coefficient 1} + \text{Variable 2} \times \text{Coefficient 2} + \text{Variable 3} \times \text{Coefficient 3} \dots \text{(Equation 1)}$$

A pattern n (n is a natural number: n = 1, 2, 3 ...) illustrated in Fig. 10 corresponds to the variable n and the coefficient n of Equation 1. In this case, in pattern 1, the score of the customer who is 48 years old or younger is 0. In pattern 2, the score of the customer who is 48 years old or older and the number of people in the household is less than three is 5.7 + 2 × 7.2 = 20.1. In pattern 3, the score of the customer who is 48 years old or older and the number of people in the household is equal to or more than three is 5.7 + 3 × 8.5 = 31.2.

The score calculation method is not limited to the above. For example, the score may be calculated by dividing the parameters into two stages. First, as a first row, the customer is classified into any one of patterns 1, 2, and 3 using the parameters "age" and "number of people in household" (see Fig. 10). In the second row, the score of the customer is calculated using other parameters of the customer in each of the classified patterns. For example, in a case where the other parameters are annual income, area size, and presence or absence of a child, the value of each parameter is calculated by normalization processing (to process the values so that the average is 0 and the variance is 1), and the calculated values are added up to obtain the score of the customer. Here, the calculated value of the parameter may be weighted, and the weighted values may be added up to obtain the score of the customer.

Note that the above calculation method is an example, and the score may be calculated using more parameters.

The analysis unit 16 regards that a customer with a higher score is more likely to purchase a newly-built house, and generates a customer list by arranging customers with higher scores in descending order. The generated customer list is sent to the output unit 17.

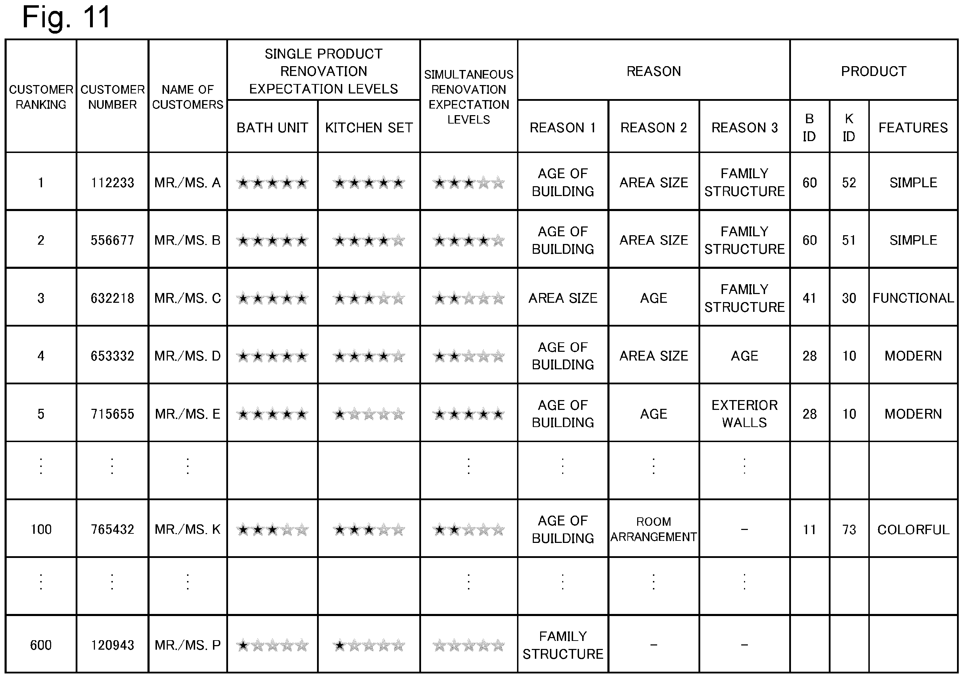

As a result of the analysis by the analysis unit 16, the output unit 17 outputs a customer candidate that satisfies a predetermined condition in relation to the product. Here, the customer relevant to the product refers to, for example, a customer who is likely to be interested in the product, a customer whose preference meets with the product, or a customer who is likely to purchase the product. The customer satisfying the predetermined condition indicates, for example, that the score calculated by the analysis unit 16 is a predetermined value or more. When receiving the customer list including a list of the customer candidates, which is generated by the analysis unit 16, the output unit 17 displays the customer list on the display unit (not illustrated) of the housing business support device 10 or the display unit 4a of the terminal 4 of the salesperson. The output unit 17 outputs, for example, the customer list illustrated in Fig. 11. The customer list in Fig. 11 is a list of information on customers who are likely to purchase the "bath unit" or the "kitchen set" among the renovation products of the product information or purchase them simultaneously. The customer list is data including, as items, information on a customer ranking, a customer number, a customer name, a renovation expectation level of the bath unit, an expectation level of renovation of the kitchen set, an expectation level of simultaneous renovation of the bath unit and the kitchen set, reasons, and products. The customer ranking is a rank in which customers are ranked in descending order of scores. The renovation expectation level is obtained by ranking the score of each product into five levels and representing the score with stars. For example, scores 0 to 20 are represented by one star, scores 21 to 40 are represented by two stars, scores 41 to 60 are represented by three star, scores 61 are 80 are represented by four stars, and scores 81 to 100 are represented by five stars. The simultaneous renovation expectation level is a value obtained by adding the renovation expectation levels of the bath unit and the kitchen set by performing some calculation processing. Alternatively, the value may be a value obtained by quantifying the reason or product and weighting the numerical value with the sum of the numerical values. The value of the simultaneous renovation expectation level is also ranked for each score and displayed with stars, similarly to the above-described renovation expectation level. The reason is a parameter that has a greater influence on the calculation of the score. For example, in a score calculation formula for renovation of a bath unit and a kitchen set, parameters having a great influence on the age of the building, the area size, and a floor plan in the residence information, and age, family structure, and the like of the customer information are displayed as reason (Reason 1, Reason 2 and Reason 3) associated with respective customer numbers. As a product, B-ID (a product ID of a bath unit) and K-ID (a product ID of a kitchen set) as well as features (for example, simple, functional, modern) of these products are displayed.

(Operations of Housing Business Support Device)

Operations of the housing business support device 10 will be described. The operations of the housing business support device 10 are roughly divided into an operation of inputting and updating information of the integrated information storage unit 2 and an operation of outputting a customer list in which purchase of a customer is predicted based on the information of the integrated information storage unit 2. Hereinafter, the operations will be described with reference to the drawings.

(Operation of Information Input)

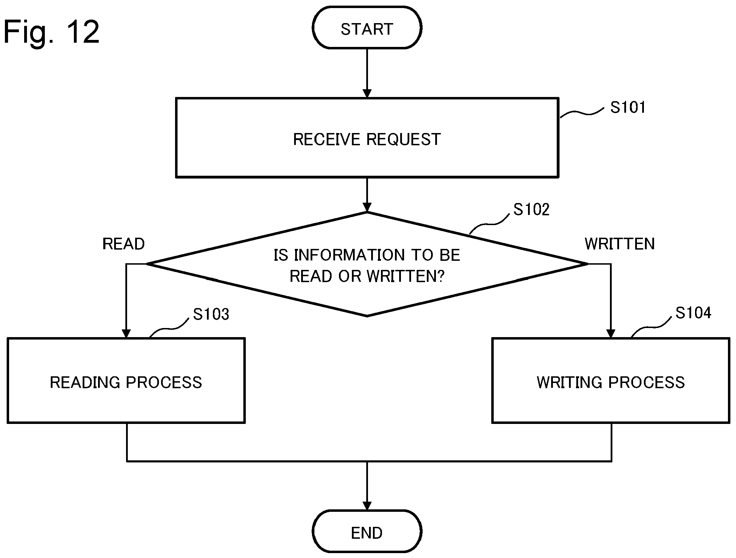

The operation in which the housing business support device 10 inputs and updates information of the integrated information storage unit 2 will be described with reference to a flowchart of Fig. 12.

In step S101, the data management unit 12 of the housing business support device 10 receives a request for reading or writing data from the automatic response control unit 11 or the terminal 4 to the integrated information storage unit 2.

In step S102, the data management unit 12 determines whether the request from the automatic response robot 1 via the automatic response control unit 11 or the request from the terminal 4 is reading or writing of data into the integrated information storage unit 2. In the case of reading data, the process proceeds to step S103. In the case of wiring data, the process proceeds to step S104.

In step S103, the data management unit 12 executes the reading process requested from the automatic response robot 1 or the reading process requested from the terminal 4 via the automatic response control unit 11. Specifically, the data management unit 12 acquires information requested from the automatic response control unit 11 or the terminal 4 from the integrated information storage unit 2, and the data management unit 12 transmits the acquired information to the terminal 4 and the automatic response control unit 11. The automatic response control unit 11 transmits the acquired information to the automatic response robot 1.

In step S104, the data management unit 12 executes the writing process requested from the automatic response robot 1 via the automatic response control unit 11 or the writing process requested from the terminal 4. Specifically, the data management unit 12 writes (newly inputs or updates) information requested from the automatic response robot 1 or the terminal 4 to the integrated information storage unit 2. The data management unit 12 may transmit a notification of writing completion to the terminal 4 and the automatic response robot 1.

As described above, the housing business support device 10 completes the information input operation.

(Operation of Customer List Output)

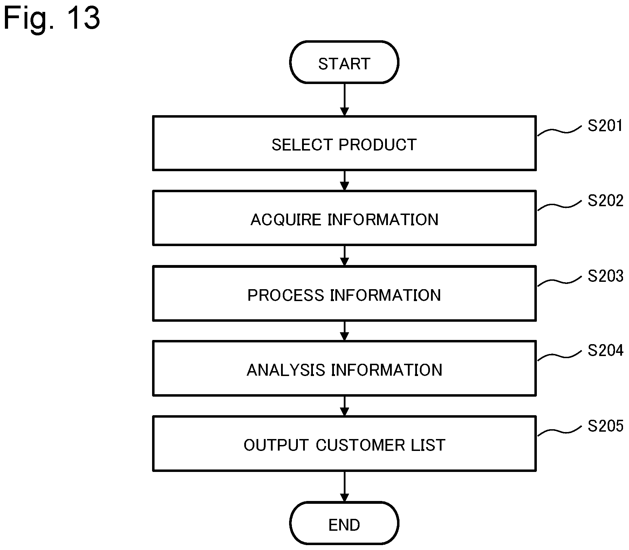

An operation in which the housing business support device 10 outputs a customer list in which purchase of a customer is predicted based on information of the integrated information storage unit 2 will be described with reference to a flowchart of Fig. 13.

In step S201, the selection unit 13 of the housing business support device 10 selects a product for which customer candidates (a customer list) are to be extracted from at least one of product information regarding new building, product information regarding renovation, and product information regarding aftercare service. The selection unit 13 causes the salesperson to select product that requires a customer list on the display unit 4a or the like of the terminal 4 of the salesperson. When acquiring a selected product, the selection unit 13 transfers the data to the acquisition unit 14.

In step S202, the acquisition unit 14 acquires information necessary for generating the customer list associated with the selected product from the integrated information storage unit 2. The acquisition unit 14 transfers information needed to generate a customer list associated with the acquired product to the processing unit 15.

In step S203, the processing unit 15 performs processing (preprocessing) of information necessary for generating the customer list associated with the product, which is acquired from the acquisition unit 14. The processing unit 15 sends the processed information to the analysis unit 16.

In step S204, the analysis unit 16 analyzes the customer having relevance to the product based on the processed information (information necessary for generating the customer list) acquired from the processing unit 15. The customer related to product is a customer who is predicted to purchase the product. The analysis unit 16 sends a customer candidate obtained as a result of the analysis to the output unit 17 as a customer list.

In step S205, the output unit 17 transmits the acquired customer list to the terminal 4 of the salesperson.

The housing business support device 10 thus ends the operation of outputting the customer list.

(Effects of First Example Embodiment)

According to the first example embodiment of the present disclosure, it is possible to support business activities related to housing. This is because the selection unit 13 selects a product for which a customer candidate (customer list) is to be extracted from at least one of product information related to new building, renovation, and aftercare services, the analysis unit 16 analyzes a customer having relevance to the product based on information necessary for extracting the customer candidate, and the output unit 17 outputs the customer candidate based on the analysis result.

<Second Example Embodiment>

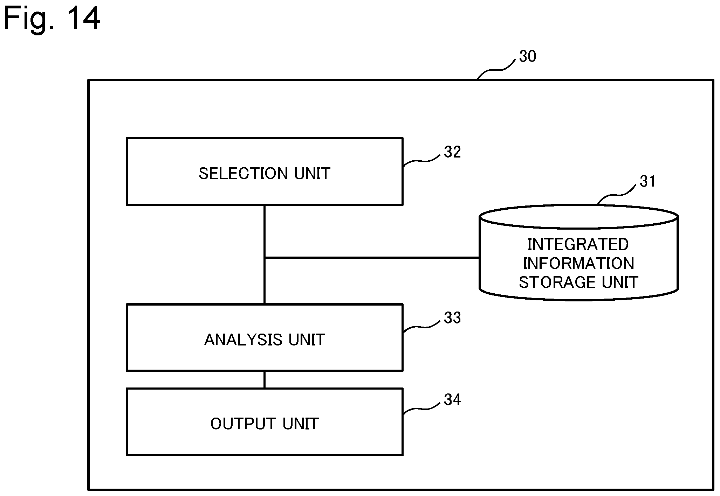

As illustrated in Fig. 14, a housing business support device 30 according to a second example embodiment of the present disclosure includes an integrated information storage unit 31, a selection unit 32, an analysis unit 33, and an output unit 34. The housing business support device 30 is a minimum configuration example of the housing business support device 10 according to the first example embodiment.

The integrated information storage unit 31 stores at least one piece of information related to customers, information related to products, information related to a residence of the customer, information related to a salesperson supporting the customer, and information related to a contact between the customer and the salesperson.

The selection unit 32 presents, as options to be selected, products for extracting a customer candidate, from at least one piece of product information related to new building, product information related to renovation, and product information related to aftercare service.

The analysis unit 33 analyzes customers correlated with a selected product based on information necessary for extracting a customer candidate associated with the product, acquired from the integrated information storage unit 31.

As a result of the analysis, the output unit 34 outputs a customer satisfying a predetermined condition relevant to the product, as a customer candidate.

According to the second example embodiment of the present disclosure, it is possible to support business activities related to housing. This is because the selection unit 32 selects a product for which customer candidates (a customer list) are to be extracted from at least one piece of product information related to new building, renovation, and aftercare service, the analysis unit 33 analyzes a customer having relevance to the product based on information necessary for extraction of the customer candidates acquired from the integrated information storage unit 31, and the output unit 34 outputs the customer candidate based on the analysis result.

(Information Processing Device)

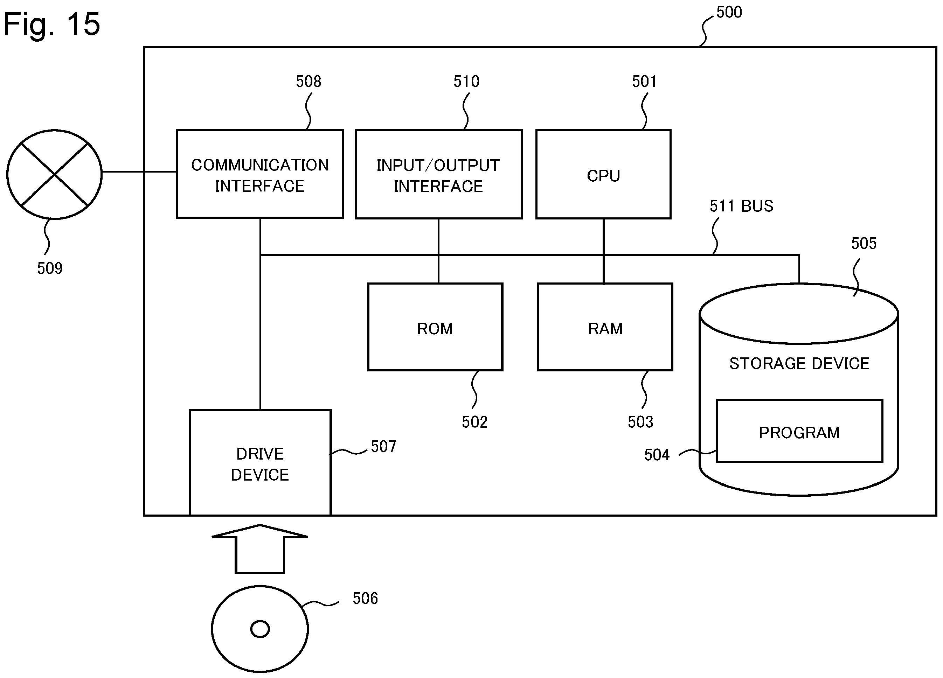

In each example embodiment of the present disclosure described above, some or all of the components in the housing business support device illustrated in Figs. 2, 14, and the like can be achieved by using, for example, an arbitrary combination of an information processing device 500 and a program as illustrated in Fig 15. The information processing device 500 includes the following configuration as an example.

- Central processing unit (CPU) 501
- Read only memory (ROM) 502
- Random access memory (RAM) 503
- Storage device 505 storing program 504 and other data
- Drive device 507 that reads and writes recording medium 506
- Communication interface 508 connected with communication network 509
- Input/output interface 510 for inputting/outputting data
- Bus 511 connecting each component

Each component of the housing business support device in each example embodiment of the present application is achieved by the CPU 501 acquiring and executing the program 504 for realizing these functions. The program 504 that implements the functions of the components of the housing business support device is stored in advance in the storage device 505 or the RAM 503, for example, and is read by the CPU 501 as necessary. Note that the program 504 may be supplied to the CPU 501 via the communication network 509, or may be stored in advance in the recording medium 506, and the drive device 507 may read the program and supply the program to the CPU 501.

There are various modifications of the implementation method of each device. For example, the housing business support device may be achieved by an arbitrary combination of a separate information processing device and program for each component. In addition, a plurality of components included in the housing business support device may be achieved by an arbitrary combination of one information processing device 500 and a program.

In addition, some or all of the components of the housing business support device are achieved by other general-purpose or dedicated circuits, processors, or the like, or a combination of those devices. These may be configured by a single chip or may be configured by a plurality of chips connected via a bus.

Some or all of the components of the housing business support device may be achieved by a combination of the above-described circuit and the like and a program.

In a case where some or all of the components of the housing business support device are achieved by a plurality of information processing device, circuits, and the like, the plurality of information processing device, circuits, and the like may be arranged in a centralized manner or in a distributed manner. For example, the information processing device, the circuit, and the like may be achieved as a form in which each is connected via a communication network, such as a client and server system or a cloud computing system.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese Patent Application No. 2020 053502 filed on March 25, 2020, the disclosure of which is incorporated herein in its entirety by reference.

[Reference signs List]

| | |
|---|---|
| 1 | Automatic response robot |
| 2 | Integrated information storage unit |
| 3 | Prediction model storage unit |
| 4 | Terminal |
| 10 | Housing business support device |
| 11 | Automatic response control unit |
| 12 | Data management unit |
| 13 | Selection unit |
| 14 | Acquisition unit |
| 15 | Processing unit |
| 16 | Analysis unit |
| 17 | Output unit |
| 21 | Customer information storage unit |
| 22 | Product information storage unit |
| 23 | Residence information storage unit |
| 24 | Contact information storage unit |
| 25 | Business information storage unit |
| 30 | Housing business support device |
| 31 | Integrated information storage unit |
| 32 | Selection unit |
| 33 | Analysis unit |
| 34 | Output unit |
| 100 | Housing business support system |
| 500 | Information processing device |
| 504 | Program |
| 505 | Storage device |
| 506 | Recording medium |
| 507 | Drive device |
| 508 | Communication interface |
| 509 | Communication network |
| 510 | Input/output interface |
| 511 | Bus |

**Claims**

1. A housing business support device comprising:

   a selection means configured to present, as an option to be selected, a product for which a customer candidate is extracted from at least one of product information related to new building, product information related to renovation, and product information related to aftercare service;
   an integrated information storage means configured to store at least one of information related to customers, information related to the products, information related to customer residences, information related to salespersons who support the customers, and information related to contact between the customers and the salespersons;
   an analysis means configured to analyze the customer relevant to the selected product based on information needed to extract the customer candidate associated with the product, which is obtained from the integrated information storage means; and
   an output means configured to output, as an analysis result, the customer candidate satisfying a predetermined condition regarding the product.

2. The housing business support device according to claim 1, wherein

   the product information comprises an upper class, a middle class that is made classifying the upper class, and a lower class that is made classifying the middle class, and
the selection means configured to select the product from one of the upper class, middle class, and lower class.

3. The housing business support device according to claim 1 or 2, wherein
more than one product is selected from the product information.

4. The housing business support device according to claim 1, wherein
the information related to customers includes customer phase information indicating that the customer is a customer candidate of at least one of the new building, the renovation, and the aftercare service.

5. A housing business support system comprising:

the housing business support device according to any one of claims 1 to 4; and
a robot that is communicably connected to the housing business support device and interacts with the customers via voice or text.

6. The housing business support system according to claim 5, wherein

the housing business support device includes an automatic response control means configured to control the robot, and
the automatic response control means obtains information from the integrated information storage means that includes at least one of the information related to customers, the information related to products, the information related to customers residence, the information related to salespersons who support the customers, the information related to contact between the customers and salespersons to cause the robot to interact with the customers, and stores information obtained as a result of the interaction to the integrated information storage means.

7. The housing business support system according to claim 5 or 6, wherein
the information related to products includes products that the salespersons are in charge and products that the robot is in charge.

8. A housing business support method comprising:

presenting, as an option to be selected, a product for which a customer candidate is extracted from at least one of product information related to new building, product information related to renovation, and product information related to aftercare service;
analyzing the customer relevant to the selected product based on information needed to extract the customer candidate associated with the product, which is obtained from an integrated information storage means storing at least one of information related to customers, information related to the products, information related to customer residences, information related to salespersons who support the customers, and information related to contact between the customers and the salespersons; and
outputting, as an analysis result, the customer candidate satisfying a predetermined condition regarding the product.

9. A recording medium storing a program that causes a computer execute:

presenting, as an option to be selected, a product for which a customer candidate is extracted from at least one of product information related to newly-built houses, product information related to renovation, and product information related to aftercare service;
analyzing the customer relevant to the selected product based on information needed to extract the customer candidate associated with the product, which is obtained from an integrated information storage means storing at least one of information related to customers, information related to the products, information related to customer residences, information related to salespersons who support the customers, and information related to contact between the customers and the salespersons; and
outputting, as an analysis result, the customer candidate satisfying a predetermined condition regarding the product.

# Fig. 1

BUSINESS QUALITY

4  4a   4  4a   4  4a

NEW BUILDING    RENOVATION    AFTER-SALE
SALESPERSON    SALESPERSON    SALESPERSON

CUSTOMER

HOUSING BUSINESS SUPPORT SYSTEM

CUSTOMER LIST

100

1

AUTOMATIC RESPONSE ROBOT

INFORMATION ON CUSTOMERS, ETC.

INFORMATION ON CUSTOMERS, ETC.

10 HOUSING BUSINESS SUPPORT DEVICE

3  PREDICTION MODEL STORAGE UNIT

INFORMATION ON CUSTOMERS, ETC.

2  INTEGRATED INFORMATION STORAGE UNIT

EP 4 131 131 A1

# Fig. 2

EP 4 131 131 A1

# Fig. 3

CUSTOMER INFORMATION

| KEY INFORMATION | ATTRIBUTE INFORMATION | ADDITIONAL INFORMATION | RANK INFORMATION |
|---|---|---|---|
| CUSTOMER NUMBER | NAME | COST PLAN | CUSTOMER RANK |
| BUSINESS NUMBER | SEX, AGE | OWNED LAND | CUSTOMER PHASE |
| RESIDENCE NUMBER | CURRENT ADDRESS | DESIRED COMPLETION DATE | CUSTOMER TYPE |
| | PAST ADDRESSES | COMPETITOR | |
| | WORK PLACE, ANNUAL INCOME | INTRODUCER | |
| | FAMILY STRUCTURE | QUESTIONNAIRE RESPONSES | |
| | CARS | PURCHASE HISTORY | |
| | E-MAIL ADDRESS | | |
| | PHONE NUMBER | | |
| | | | |

EP 4 131 131 A1

Fig. 4

NEW BUILDING
CUSTOMER

RENOVATION
CUSTOMER

AFTER-SALE
CUSTOMER

A

B

C

D

E

F

G

H

## Fig. 5

| CUSTOMER TYPE | AGE/SEX | ANNUAL INCOME | FAMILY STRUCTURE | HOBBY | CARS | PREFERENCES |
|---|---|---|---|---|---|---|
| $\alpha$ | 50S MALE | 10 MILLION | WIFE + THREE CHILDREN | DRIVING | OWNS ONE | TRADITIONAL |
| $\beta$ | 40S MALE | 8 MILLION | WIFE | EATING OUT | NONE | MODERN |
| $\gamma$ | 30S MALE | 6 MILLION | (BETROTHED) | SURFING | OWNS ONE | NATURAL |
|  |  |  |  |  |  |  |
|  |  |  |  |  |  |  |
|  |  |  |  |  |  |  |

EP 4 131 131 A1

# Fig. 6

PRODUCT INFORMATION

| NEW BUILDING PRODUCTS | | RENOVATION PRODUCTS | | | | | | | AFTER-SALE PRODUCTS | | |
|---|---|---|---|---|---|---|---|---|---|---|---|
| CUSTOM-BUILT HOUSES | READY-BUILT HOUSES | BATH UNITS | WOOD DECKS | SUNROOMS | ROOM EXPANSION | DOORS | KITCHEN SETS | TOILETS | ROOFS | EXTERIOR WALLS | FLOORS |
| PRODUCT ID PRODUCT NAME PRODUCT FEATURES FLAG | PRODUCT ID PRODUCT NAME PRODUCT FEATURES FLAG | PRODUCT ID PRODUCT NAME PRODUCT FEATURES FLAG | PRODUCT ID PRODUCT NAME PRODUCT FEATURES FLAG | PRODUCT ID PRODUCT NAME PRODUCT FEATURES FLAG | PRODUCT ID PRODUCT NAME PRODUCT FEATURES FLAG | PRODUCT ID PRODUCT NAME PRODUCT FEATURES FLAG | PRODUCT ID PRODUCT NAME PRODUCT FEATURES FLAG | PRODUCT ID PRODUCT NAME PRODUCT FEATURES FLAG | PRODUCT ID PRODUCT NAME PRODUCT FEATURES FLAG | PRODUCT ID PRODUCT NAME PRODUCT FEATURES FLAG | PRODUCT ID PRODUCT NAME PRODUCT FEATURES FLAG |
| PRODUCT ID PRODUCT NAME PRODUCT FEATURES FLAG | PRODUCT ID PRODUCT NAME PRODUCT FEATURES FLAG | PRODUCT ID PRODUCT NAME PRODUCT FEATURES FLAG | PRODUCT ID PRODUCT NAME PRODUCT FEATURES FLAG | PRODUCT ID PRODUCT NAME PRODUCT FEATURES FLAG | PRODUCT ID PRODUCT NAME PRODUCT FEATURES FLAG | PRODUCT ID PRODUCT NAME PRODUCT FEATURES FLAG | PRODUCT ID PRODUCT NAME PRODUCT FEATURES FLAG | PRODUCT ID PRODUCT NAME PRODUCT FEATURES FLAG | PRODUCT ID PRODUCT NAME PRODUCT FEATURES FLAG | PRODUCT ID PRODUCT NAME PRODUCT FEATURES FLAG | PRODUCT ID PRODUCT NAME PRODUCT FEATURES FLAG |
| ... | ... | ... | ... | ... | ... | ... | ... | ... | ... | ... | ... |

EP 4 131 131 A1

# Fig. 7

RESIDENCE INFORMATION

| KEY INFORMATION | LAND INFORMATION | BUILDING INFORMATION | EQUIPMENT INFORMATION |
|---|---|---|---|
| CUSTOMER NUMBER | BUILDING SITE | BUILDING STRUCTURE | INSTALLED PRODUCTS |
| BUSINESS INFORMATION | BUILDING COVERAGE RATIO, FLOOR AREA RATIO | TOTAL FLOOR AREA, BUILDING AREA | PRODUCT ID |
| RESIDENCE NUMBER | AREA USAGE | ROOM ARRANGEMENT, ORIENTATION | PRODUCT FEATURES |
|  | GROUND INFORMATION | SELLING PRICE, COST RATE | INSTALLATION HISTORY |
|  | AREA SIZE | HOUSING PERFORMANCE INFORMATION |  |
|  |  | CONSTRUCTION SCHEDULE, COMPLETION DATE |  |
|  |  | RENOVATION HISTORY |  |
|  |  | AGE OF BUILDING |  |
|  |  |  |  |
|  |  |  |  |

EP 4 131 131 A1

# Fig. 8

CONTACT INFORMATION

| KEY INFORMATION | BUSINESS CONTACT INFORMATION | ROBOT SUPPORT INFORMATION | ACCESS INFORMATION |
|---|---|---|---|
| CUSTOMER NUMBER | CONTACT DATE AND TIME | SUPPORT DATE AND TIME | WEB ACCESS HISTORY |
| BUSINESS INFORMATION | CONTACT METHOD | SUPPORT METHOD | |
| RESIDENCE NUMBER | CONTACT LOCATION | SUPPORT LOCATION | |
| | CONTACT SOURCE | SUPPORT DETAILS | |
| | CONTACT DESTINATION | | |
| | ACTIVITIES | | |
| | | | |
| | | | |
| | | | |
| | | | |

EP 4 131 131 A1

# Fig. 9

BUSINESS INFORMATION

| KEY INFORMATION | SALESPERSON INFORMATION | HANDLED NEW BUILDING INFORMATION | HANDLED RENOVATION INFORMATION | HANDLED AFTER-SALE INFORMATION |
|---|---|---|---|---|
| CUSTOMER NUMBER | NAME OF SALESPERSON | NUMBER OF NEGOTIATIONS | NUMBER OF NEGOTIATIONS | NUMBER OF NEGOTIATIONS |
| BUSINESS INFORMATION | SEX/AGE | NUMBER OF CONTRACTS | NUMBER OF CONTRACTS | NUMBER OF CONTRACTS |
| RESIDENCE NUMBER | DEPARTMENT, POSITION | NUMBER OF DESIGNS | NUMBER OF DESIGNS | NUMBER OF DESIGNS |
| | LENGTH OF SERVICE | HANDLED CONTENT | HANDLED CONTENT | HANDLED CONTENT |
| | CURRENT ADDRESS | NUMBER OF COMPLETION | NUMBER OF COMPLETION | NUMBER OF COMPLETION |
| | PAST ADDRESSES | SALES RESULTS | SALES RESULTS | SALES RESULTS |
| | FAMILY STRUCTURE | NUMBER OF CUSTOMERS | NUMBER OF CUSTOMERS | NUMBER OF CUSTOMERS |
| | QUALIFICATIONS | | | |
| | BUSINESS TYPE | | | |
| | | | | |

EP 4 131 131 A1

Fig. 10

```
          ┌─────────────────────────────┐
          │   48 YEAS OLD OR OLDER?      │
          └─────────────────────────────┘
           YOUNGER THAN 48         48 OR OLDER
      ┌─────────────┐     ┌────────────────────────────┐
      │  PATTERN 1  │     │  THREE OR MORE HOUSEHOLDS?  │
      └─────────────┘     └────────────────────────────┘
            LESS THAN THREE         THREE OR MORE
              ┌─────────────┐   ┌─────────────┐
              │  PATTERN 2  │   │  PATTERN 3  │
              └─────────────┘   └─────────────┘
```

# Fig. 11

| CUSTOMER RANKING | CUSTOMER NUMBER | NAME OF CUSTOMERS | SINGLE PRODUCT RENOVATION EXPECTATION LEVELS | | SIMULTANEOUS RENOVATION EXPECTATION LEVELS | REASON | | | PRODUCT | | |
|---|---|---|---|---|---|---|---|---|---|---|---|
| | | | BATH UNIT | KITCHEN SET | | REASON 1 | REASON 2 | REASON 3 | B ID | K ID | FEATURES |
| 1 | 112233 | MR./MS. A | ★★★★★ | ★★★★★ | ★★★☆☆ | AGE OF BUILDING | AREA SIZE | FAMILY STRUCTURE | 60 | 52 | SIMPLE |
| 2 | 556677 | MR./MS. B | ★★★★★ | ★★★★☆ | ★★★★☆ | AGE OF BUILDING | AREA SIZE | FAMILY STRUCTURE | 60 | 51 | SIMPLE |
| 3 | 632218 | MR./MS. C | ★★★★★ | ★★★☆☆ | ★★☆☆☆ | AREA SIZE | AGE | FAMILY STRUCTURE | 41 | 30 | FUNCTIONAL |
| 4 | 653332 | MR./MS. D | ★★★★★ | ★★★★☆ | ★★☆☆☆ | AGE OF BUILDING | AREA SIZE | AGE | 28 | 10 | MODERN |
| 5 | 715655 | MR./MS. E | ★★★★★ | ★☆☆☆☆ | ★★★★★ | AGE OF BUILDING | AGE | EXTERIOR WALLS | 28 | 10 | MODERN |
| ⋮ | ⋮ | ⋮ | | | ⋮ | ⋮ | ⋮ | ⋮ | | | |
| 100 | 765432 | MR./MS. K | ★★★☆☆ | ★★★☆☆ | ★★☆☆☆ | AGE OF BUILDING | ROOM ARRANGEMENT | – | 11 | 73 | COLORFUL |
| ⋮ | ⋮ | ⋮ | | | ⋮ | ⋮ | ⋮ | ⋮ | | | |
| 600 | 120943 | MR./MS. P | ★☆☆☆☆ | ★☆☆☆☆ | ☆☆☆☆☆ | FAMILY STRUCTURE | – | – | | | |

EP 4 131 131 A1

Fig. 12

START

RECEIVE REQUEST — S101

IS INFORMATION TO BE READ OR WRITTEN? — S102

READ

WRITTEN

S103 — READING PROCESS

S104 — WRITING PROCESS

END

EP 4 131 131 A1

# Fig. 13

```
        ( START )
            |
            v
+---------------------------+   ~ S201
|      SELECT PRODUCT       |
+---------------------------+
            |
            v
+---------------------------+   ~ S202
|    ACQUIRE INFORMATION     |
+---------------------------+
            |
            v
+---------------------------+   ~ S203
|    PROCESS INFORMATION     |
+---------------------------+
            |
            v
+---------------------------+   ~ S204
|    ANALYSIS INFORMATION    |
+---------------------------+
            |
            v
+---------------------------+   ~ S205
|   OUTPUT CUSTOMER LIST     |
+---------------------------+
            |
            v
        (  END  )
```

EP 4 131 131 A1

Fig. 14

Fig. 15

# Fig. 16

CUSTOMER

BUSINESS REPRESENTATIVE

BUSINESS REPRESENT- ATIVE

BUSINESS REPRESENTATIVE

BUSINESS QUALITY

BUSINESS QUALITY

BUSINESS QUALITY

RESIDENCE

RESIDENCE RENOVATION

AFTER-SALE

DETACHED HOUSE PROJECT

RENOVATION PROJECT

AFTER-SALE PROJECT

**INTERNATIONAL SEARCH REPORT**

| International application No. |
|---|
| PCT/JP2021/007959 |

A. CLASSIFICATION OF SUBJECT MATTER
G06Q 50/16(2012.01)i
FI: G06Q50/16

According to International Patent Classification (IPC) or to both national classification and IPC

B. FIELDS SEARCHED

Minimum documentation searched (classification system followed by classification symbols)
G06Q50/16

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X Y | JP 2002-334201 A (SUPREME SYSTEM CONSULTING CORPORATION) 22 November 2002 (2002-11-22) paragraphs [0054]-[0055], [0061], [0072]-[0088], [0095]-[0108] | 1-4, 8-9 5-7 |
| Y | JP 2012-8638 A (TOYOTA HOUSING CORPORATION) 12 January 2012 (2012-01-12) paragraphs [0058], [0095]-[0098] | 5-7 |
| Y | JP 2005-293052 A (HONDA MOTOR CO., LTD.) 20 October 2005 (2005-10-20) paragraphs [0020]-[0024], [0031]-[0035] | 5-7 |
| A | JP 2001-357143 A (DAINIPPON PRINTING CO., LTD.) 26 December 2001 (2001-12-26) entire text, all drawings | 1-9 |
| A | JP 2007-310851 A (MARKETING TECHNOLOGIES KK) 29 November 2007 (2007-11-29) entire text, all drawings | 1-9 |

☐ Further documents are listed in the continuation of Box C.　　☒ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search <br> 19 May 2021 (19.05.2021) | Date of mailing of the international search report <br> 01 June 2021 (01.06.2021) |
|---|---|
| Name and mailing address of the ISA/ <br> Japan Patent Office <br> 3-4-3, Kasumigaseki, Chiyoda-ku, <br> Tokyo 100-8915, Japan | Authorized officer <br><br> Telephone No. |

Form PCT/ISA/210 (second sheet) (January 2015)

**INTERNATIONAL SEARCH REPORT**
Information on patent family members

International application No.

PCT/JP2021/007959

| Patent Documents referred in the Report | Publication Date | Patent Family | Publication Date |
|---|---|---|---|
| JP 2002-334201 A | 22 Nov. 2002 | US 2002/0128910 A1 paragraphs [0055]-[0057], [0063]-[0069], [0093]-[0179], [0186]-[0201] | |
| JP 2012-8638 A | 12 Jan. 2012 | (Family: none) | |
| JP 2005-293052 A | 20 Oct. 2005 | US 2005/0222712 A1 paragraphs [0023]-[0027], [0034]-[0038] | |
| JP 2001-357143 A | 26 Dec. 2001 | (Family: none) | |
| JP 2007-310851 A | 29 Nov. 2007 | (Family: none) | |

Form PCT/ISA/210 (patent family annex) (January 2015)

**EP 4 131 131 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10124584 A
- JP 2004139196 A
- JP 2002024523 A
- JP 2002149958 A
- JP 2020053502 A